(19) Europäisches Patentamt
European Patent Office
Office européen des brevets

(11) Publication number: **0 439 293 A1**

# (12) EUROPEAN PATENT APPLICATION

(21) Application number: **91300400.8**

(51) Int. Cl.[5]: **C09D 4/00**

(22) Date of filing: **18.01.91**

(30) Priority: **24.01.90 US 469108**

(43) Date of publication of application:
**31.07.91 Bulletin 91/31**

(84) Designated Contracting States:
**DE FR GB IT**

(71) Applicant: **DOW CORNING CORPORATION**
**3901 S. Saginaw Road**
**Midland Michigan 48686-0994(US)**

(72) Inventor: **Cottington, Levi James**
**21 Erie Court**
**Midland, Michigan(US)**
Inventor: **Revis, Anthony**
**9417 Garfield Road**
**Freeland, Michigan(US)**

(74) Representative: **Laredo, Jack Joseph et al**
**Elkington and Fife Beacon House 113**
**Kingsway**
**London, WC2B 6PP(GB)**

## (54) Alkoxy-functional silane compositions for unprimed adhesion to polycarbonate.

(57) The present invention relates to a novel coating composition containing multifunctional acrylates, alkoxy-functional silanes, hydroxyacrylates and colloidal silica. This coating composition may be applied to solid substrates and cured by exposure to ultraviolet light or electron beam radiation to form a substantially clear, abrasion resistant layer. The composition has particular utility as an abrasion resistant coating for synthetic films, especially polycarbonate, without the need for primers.

EP 0 439 293 A1

## ALKOXY-FUNCTIONAL SILANE COMPOSITIONS FOR UNPRIMED ADHESION TO POLYCARBONATE

This invention relates to a radiation curable protective coating composition. More specifically, it relates to a coating composition containing alkoxy-functional silanes, multifunctional acrylates, hydroxyacrylates and colloidal silica. When applied to a substrate, such as polycarbonate, and cured, this composition forms a protective, abrasion resistant, weather resistant, ultraviolet light resistant, transparent coating firmly held thereon, without the need for primers. The present invention offers many advantages over known silicone coating compositions which contain alkoxy-functional silanes and colloidal silica in that unprimed adhesion to polycarbonate is attained. This is accomplished by incorporating hydroxyacrylates and multifunctional acrylates into such compositions.

Alkoxy-functional silanes have been readily employed in abrasion resistant coating formulations. For example, U.S. Patent No. 3,986,997, issued October 19, 1976, and assigned to Dow Corning Corporation, Midland, MI., and U.S. Patent Nos. 4,309,319 issued January 5, 1982 and 4,436,851 issued March 13, 1984, and assigned to General Electric Company, Waterford, N.Y., describe thermally cured abrasion resistant coatings formed from mixtures of alkoxy-functional silanes and colloidal silica. Although the cured coating films of these compositions have good adhesiveness to acrylic type resin substrates, adhesion to polycarbonate type resin substrates is very poor, without the additional step of adding a primer.

Acrylates were later introduced into abrasion resistant coating compositions, to allow such compositions to be radiation cured. The introduction of acrylates necessitated the replacement of the alkoxy-functional silanes used in the thermally cured compositions with silanes capable of reacting with acrylates such as acryloxy, glycidoxy or and/or vinyl functional silanes. Such compositions are described, for example, in U.S. Patent Nos. 4,486,504, issued December 4, 1984 and assigned to General Electric Company, Waterford, N.Y. and 4,822,828, issued April 18, 1989 and assigned to Hoechst Celanese Corporation, Somerville, N.J. While the cured coating films of these compositions adhere much better to polycarbonate, they are also much more costly and less resistant to scratching than the previously mentioned alkoxy-functional silane compositions.

Attempts have been made to incorporate alkoxy-functional silanes into radiation curable compositions. Japanese Patent No. 62,256,874, issued November 11, 1987, and assigned to Toshiba Silicone KK., discloses an ultraviolet light curable coating composition containing alkoxy-functional silanes, polyfunctionalacrylate compounds, organic based colloidal silica and a photoinitiator. In the Japanese patent the alkoxy-functional silanes are hydrolyzed before being combined with the polyfunctionalacrylates and colloidal silica. The present inventors, however, have discovered that the hydrolysis product of the alkoxy-functional silanes may be prepared in situ. In addition, unlike in the previously mentioned Japanese application, monofunctionalacrylates and aqueous based colloidal silica are necessary components of the present invention.

It is therefore an object of the present invention to produce a radiation curable coating composition which excels in abrasion resistance, weather resistance and unprimed adhesion to polycarbonate type resins.

The object described above is accomplished by a radiation curable coating composition comprising:

(A) at least one multifunctional acrylate monomer;

(B) a hydrolysis product of an alkoxy-functional silane of the formula

$R^1_aSi(OR^2)_{4-a}$

wherein:

$R^1$ and $R^2$ are independently selected from the group consisting of hydrogen and a monovalent hydrocarbon radicals having 1 to 6 carbon atoms, including halogenated species of such radicals;

a is an integer from 0 to 2;

(C) a hydroxyacrylate selected from the group consisting of

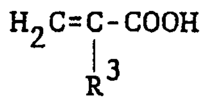

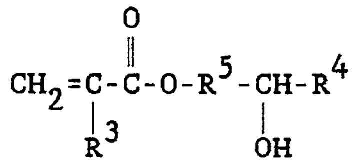

and mixtures thereof, wherein:

$R^3$ is hydrogen or a monovalent hydrocarbon radical having 1 to 6 carbon atoms;

$R^4$ is selected from the group consisting of hydrogen, a monovalent hydrocarbon radical having from 1 to 6 carbon atoms, and a monovalent hydrocarbon radical having from 1 to 6 carbon atoms and containing at least one hydroxy group,

$R^5$ is a divalent hydrocarbon radical having 1 to 10 carbon atoms, optionally containing one or more ether oxygen atoms within aliphatic segments thereof; and

(D) colloidal silica.

Component (A) of this novel composition comprises at least one acrylate monomer which contains two or more functional groups selected from the group consisting of acryloxy and methacryloxy groups. These multifunctional acrylate monomers may be used singly or in combination with other multifunctional acrylate monomers. Some preferred multifunctional acrylate monomers useable as component (A) include:

diacrylates of the formulas;
1,6-hexanediol diacrylate,
1,4-butanediol diacrylate,
ethylene glycol diacrylate,
diethylene glycol diacrylate,
tetraethylene glycol diacrylate,
tripropylene glycol diacrylate,
neopentyl glycol diacrylate,
1,4-butanediol dimethacrylate,
poly(butanediol) diacrylate,
tetraethylene glycol dimethacrylate,
1,3-butylene glycol diacrylate,
triethylene glycol diacrylate,
triisopropylene glycol diacrylate,
polyethylene glycol diacrylate,
bisphenol A dimethacrylate,
triacrylates of the formulas;
trimethylolpropane triacrylate,
trimethylolpropane trimethacrylate,
pentaerythritol monohydroxy triacrylate,
trimethylolpropane triethoxy triacrylate,
tetraacrylates of the formulas;
pentaerythritol tetraacrylate,
di-trimethylolpropane tetraacrylate,
pentaacrylates of the formulas;
dipentaerythritol (monohydroxy) pentaacrylate.

These multifunctional acrylate monomers are commercially available from Aldrich Chemical Company, Inc., Milwaukee, Wisconsin.

The second component (B) of this composition comprises a silicon compound selected from the group consisting of an alkoxy-functional silane of the formula $R^1{}_aSi(OR^2)_{4-a}$, hydrolysis products of such a silane, and mixtures thereof. $R^1$ and $R^2$ are independently selected from the group consisting of hydrogen and a monovalent hydrocarbon radicals having 1 to 6 carbon atoms, including halogenated species of such radicals. Preferably, $R^1$ and $R^2$ will be lower alkyl radicals such as methyl, ethyl, propyl, etc., but may include other saturated and unsaturated species including vinyl, aryl, etc. The letter a is an integer from 0 to

2 such that there are 4-a alkoxy groups in the silane molecule.

A hydrolysis product of such alkoxy-functional silanes is obtained by contacting the alkoxy-functional silanes with water. Water necessary for hydrolysis is present in the aqueous dispersion of colloidal silica. No additional water need be added. If less than a stoichiometric amount of water is utilized, a partial hydrolysis is obtained. Such partial hydrolyzates can also be used to obtain the coatings of the present invention. Among the particularly useful alkoxy-functional silanes are the following: tetraethoxysilane, ethyltriethoxysilane, diethyldiethoxysilane, tetramethoxysilane, methyltrimethoxysilane and dimethyldimethoxysilane. These alkoxy-functional silanes are commercially available from Petrach Systems, Inc., Bristol, PA.

The third component (C) of this composition comprises a hydroxyacrylate selected from the group consisting of

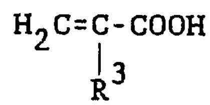

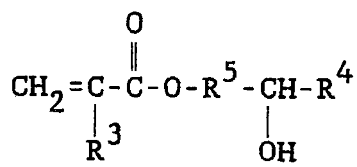

and mixtures thereof, wherein:

$R^3$ is hydrogen or a monovalent hydrocarbon radical having 1 to 6 carbon atoms. $R^4$ is selected from the group consisting of hydrogen, a monovalent hydrocarbon radical having from 1 to 6 carbon atoms, and a monovalent hydrocarbon radical having from 1 to 6 carbon atoms and containing at least one hydroxy group. $R^5$ is a divalent hydrocarbon radical having 1 to 10 carbon atoms; optionally containing one or more ether oxygen atoms within aliphatic segments thereof. $R^5$ may include alkylene, alkenylene, arylene, alkarylene and aralkylene groups. The exact nature of the organic portion of $R^5$ is not critical to the operability of this invention, the organic portion serves only as a structure to link the acryloxy functionality thereof with the hydroxy functionality thereof, and is preferably chemically inert. In this regard, the term "inert" defines structures which will not interfere with either the radiation curing of the acryloxy-functional group or with the hydroxy functionality.

Among the hydroxyacrylates which may be utilized in the present invention are:

acrylic acid
2-hydroxyethylacrylate 2-hydroxyethylmethacrylate
2-hydroxypropylacrylate
2-hydroxypropylmethacrylate
3-hydroxypropylacrylate
3-hydroxypropylcrotonate
3-hydroxypropylmethacrylate
5-hydroxypentylacrylate
2-hydroxy-3-methacryloxypropylacrylate
2-hydroxy-3-acryloxypropylacrylate
2-hydroxy-3-methacryloxypropylmethacrylate
2-hydroxyethyl 2-octenoate
2-hydroxyethyl 2-pentylacrylate

These hydroxy acrylates are commercially available from Aldrich Chemical Company, Inc., Milwaukee, WI.

The forth component (D) of this composition comprises silica in the form of a colloidal dispersion. The colloidal silica used in this composition are dispersions of organic and aqueous based colloidal silica. Organic based colloidal silica may be used as long as it is used in conjunction with aqueous based colloidal silica. Colloidal silica is available in acid or basic form. Either form may be utilized. Some preferred examples of colloidal silica usable as component (C) include: Nalco 1034A colloidal silica (Nalco 1034A), Nalco 1129 colloidal silica (Nalco 1129), Nalco 2327 colloidal silica (Nalco 2327), Nalco 2326 colloidal silica (Nalco 2326), Nalco 1140 colloidal silica (Nalco 1140), and Nalco 84SS258 colloidal silica (Nalco 84SS258), which can be obtained from Nalco Chemical Company, Naperville, IL.

Nalco 1034A has a mean particle size of 20 nm and an $SiO_2$ content of approximately 34% by weight in

water with a pH of approximately 3.1. Nalco 1129 has a mean particle size of 20nm and an $SiO_2$ content of approximately 30% by weight in a solution of 40% isopropanol and 30% water. Nalco 2327 has a mean particle size of 20nm and an $SiO_2$ content of approximately 40% by weight in water with a pH of approximately 9.3, and ammonium as the stabilizing ion. Nalco 2326 has a mean particle size of 5nm and an $SiO_2$ content of approximately 14.5% by weight in water with a pH of approximately 9.0, and ammonium as the stabilizing ion. Nalco 1140 has a mean particle size of 15nm and an $SiO_2$ content of approximately 40% by weight in water with a pH of approximately 9.7, and sodium as the stabilizing ion. Nalco 84SS258 has a mean particle size of 20nm and an $SiO_2$ content of approximately 30% by weight in a solution of propoxyethanol.

The solids content of the coating composition is generally preferred to be in the range from about 10 to 60 weight percent, most preferably about 30 to 40 weight percent of the total composition.

Other additives can be added to the compositions in order to enhance the usefulness of the coatings. For example, leveling agents, ultraviolet light absorbers, hindered amine light stabilizers (HALS), oxygen inhibitors, dyes and the like, can be included herein. All of these additives and the use thereof are well known in the art and do not require extensive discussions. Therefore, only a limited number will be referred to, it being understood that any of these compounds can be used as long as they do not deleteriously effect either the radiation curing or the transparency of the coating.

A particularly desirable additive has been found to be a small amount of a leveling agent. Leveling agents can be used on the substrates to cover surface irregularities and to aid in the uniform dispersion of the coating composition. These agents are especially useful in compositions where all the solvent has been removed. For purposes of the present invention, the addition of 0.01 to 5.0 percent commercial silicone glycol leveling agents, work well to provide the coating composition with desirable flowout and wetting properties.

Also useful as additives to the present coating compositions are UV absorbers and hindered amine light stabilizers. UV absorbers and hindered amine light stabilizers act to diminish the harmful effects of UV radiation on the final cured product and thereby enhance the weatherability, or resistance to cracking, yellowing and delamination of the coating. A preferred hindered amine light stabilizer is bis(1,2,2,6,6-pentamethyl-4-piperidinyl)-[3,5-bis(1,1-dimethylethyl-4-hydroxyphenyl)methyl]butylpropanedioate, available as Tinuvin (R) 144, from CIBA-GEIGY Corporation, Hawthorne, NY.

For the purpose of the present compositions the following UV absorbers and combinations thereof in concentrations of less than 20 weight percent based on the total composition, have been shown to produce desirable results:
bis(1,2,2,6,6-pentamethyl-4-piperidinyl)(3,5-bis(1,1-dimethylethyl-1,4-hydroxyphenyl)methyl)-butylpropanedioate, 2-ethylhexyl-2-cyano-3,3'-diphenylacrylate, 2-hydroxyl-4-n-octoxybenzophenone, 2-(2'-hydroxy-5'-methylphenyl)benzotriazole, poly(oxy-1,2-ethanediyl),alpha-(3-(3-(2H-benzotriazol-2-yl)-5-(1,1-dimethylethyl)-4-hydroxylphenyl)-1-oxopropyl)-omega-hydroxy, and Uvinul (R) D-50 and MS-40, sold by BASF Wyandotte Inc., Parsippany, NJ. Concentrations of UV absorbers, however, in the range of 1 to 5 percent based on the total weight of the composition are preferred.

Incorporating UV absorbers into the instant compositions will permit the curing process regardless of whether UV or electron beam radiation is used to cure the composition. However, in the situation where UV radiation is to be used to cure the composition, the amount of UV absorbers added must be carefully controlled so as not to hinder the cure. This limitation does not exist in the case of electron beam radiation cure.

In the practice of the present invention, the radiation curable compositions can be made by combining multifunctional acrylate monomers, alkoxy-functional silanes and hydroxyacrylates, with a given quantity of alcohol. Suitable alcohols, for example, include any water soluble or water miscible alcohol, for example, methanol, ethanol, propanol, butanol, etc., or ether alcohols, such as ethoxyethanol, butoxyethanol, methoxypropanol, etc. For purposes of the present invention, applicants prefer to use isopropanol. Generally, the manner in which these components are mixed together is not important. A small amount of a carboxylic acid may, optionally, be added dropwise to the mixture. Suitable carboxylic acids include, for example, acetic acid, propionic acid and benzoic acid, etc.

This mixture may then be allowed to stand for a period of time. While not wishing to be bound by any particular mechanism or theory, applicants believe that the hydroxy portion of the hydroxyacrylates react with the methoxy portion of the alkoxy-functional silanes. Depending on the type of hydroxyacrylates used, applicants believe that this reaction is instantaneous at room temperature. However, applicants prefer to allow the mixture to stand at 25° C for 1 to 20 hours. The colloidal silica is then added while agitation is applied to the mixture. The volatiles may optionally be removed under reduced pressure and/or the mixture may be filtered. In the case where solvents have been removed, acrylate monomers may be added to the

residue to serve as reactive diluents.

According to the coating process of the present invention, the above described compositions are coated on a substrate using conventional coating techniques modified as appropriate to the particular substrate. For example, these compositions can be applied to a variety of solid substrates by methods such as roller coating, flow coating, dip coating, spin coating, spray coating and curtain coating. These various methods of coating allow the compositions to be placed on the substrate at variable thicknesses thus allowing a wider range of use of the compositions. Coating thicknesses may vary, but for improved abrasion resistance coating thicknesses of 2-25 microns, preferably about 5 microns, are recommended.

The compositions may then be cured by either ultraviolet light or electron beam radiation. Ultraviolet light may be used to cure the compositions if one or more photoinitiators is added prior to curing. There are no restrictions on the photoinitiators as long as they can generate radicals by the absorption of optical energy. Ultraviolet light sensitive photoinitiators which may be used in the UV cure of the present composition include, but are not limited to, 2-Hydroxy-2-methyl-1-phenyl-propan-1-one (Darocur (R) 1173), sold by EM Industries, Inc., Hawthorne, New York, 2,2-Dimethoxy-2-phenyl-acetyl-phenone (Irgacure (R) 651), sold by Ciba-Geigy Corporation, Hawthorne, New York, Cyracure (R) UVI 6974 and UVI 6990, sold by Union Carbide Corporation, Danbury, CT. and the like, including blends thereof.

It is ordinarily preferable to use approximately five percent, based on solids, of at least one photoinitiator. However, depending upon individual desired process parameters such as rate of cure and ultimate abrasion resistance, the amount of the photoinitiator or combinations of photoinitiators can range from approximately 0.5 to 10.0 percent based on the total weight of the composition.

Oxygen inhibitors, which are materials used in conjunction with photoinitiators that increase their efficiency, may also be added. An example of a preferred oxygen inhibitor is 2-ethylhexyl-para-dimethylaminobenzoate, available as Uvatone (R) 8303, from The UpJohn Company, North Haven, CT.

If the radiation curable coating is to be crosslinked by electron beam radiation, no photoinitiator is required to initiate or catalyze the reaction. Electron beam sources of various types such as van de Graaff-type, resonance transformer-type, linear-type, dynatron-type, and high frequency-type can be used as a source of electron beam. Electron beam having energy of from 50 to 1000 KeV, preferably from 100 to 300 KeV discharged therefrom, may be irradiated in a dose of from 0.1 to 10.0 Mega Rads (MR). A particularly preferred source of electron beam is one wherein a continuous curtain-like beam is irradiated from linear filaments, such as that produced by the Electro Curtain CB-150 available from Energy Sciences Inc.

By choice of the proper formulation and application conditions including the optional use of a leveling agent, the compositions can be applied and will adhere to substantially all solid substrates. Substrates which are especially contemplated herein are transparent and nontransparent plastics and metals. More particularly, these plastics are synthetic organic polymeric substrates such as acrylic polymers like poly(methylmethacrylate); polyesters, such as poly(ethylene terephthalate), poly (butylene terephthalate), etc.; polyamides; polyimides; acrylonitrile-styrene copolymers; styrene-acrylonitrilebutadiene copolymers; polyvinyl chloride; butyrates; polyethylene; polyolefins and the like including modifications thereof. The compositions of this invention are especially useful as transparent coatings for polycarbonates such as poly(bisphenol-A carbonate) and those polycarbonates known as Lexan (R), sold by General Electric Company, Schenectady, New York; and as coatings for acrylics such as polymethylmethacrylates. Metal substrates on which the present compositions are also effective include bright and dull metals like aluminum and bright metallized surfaces like sputtered chromium alloy. Other solid substrates contemplated herein include wood, painted surfaces, leather, glass, ceramics, textiles and paper.

The apparatus and testing procedures used for the results shown herein are as follows:

Abrasion resistance was determined according to ASTM Method D-1044 ("Tabor Test"). The instrument used was a Teledyne Taber model 503 Taber Abraser with two 250 gram auxiliary weights (500 gram load) for each of the CS10F abrasive wheels. The polycarbonate test panels were subjected to 100 and 500 cycles on the abraser turntable. The percent change in haze which is the criterion for determining the abrasion resistance of the coating is determined by measuring the difference in haze of the unabrased and abrased coatings. Haze is defined as the percentage of transmitted light which, in passing through the sample, deviates from the incident beam by forward scattering. In this method, only light flux that deviates more than 2.5 degrees on the average is considered to be haze. The percent haze on the coatings was determined by ASTM Method D1003. A Gardner Haze Meter was used. The haze was calculated by measuring the amount of diffused light, dividing by the amount of transmitted light and multiplying by one hundred.

Adhesion was measured by modified ASTM-D-3002 (cross-hatch adhesion). The coated test specimen is scribed with a razor, cutting through the coating to form a series of cross-hatch scribes in an area of one square inch with lines to form 1/10 inch squares. Clear cellophane tape (3M No. 600 preferred), is applied to

the scribed surface, pressed down, then stripped sharply away in a direction perpendicular to the test panel surface. This first tape pull is followed by two more, using fresh tape each time. After three tape pulls, the number of squares remaining intact on the specimen are reported as a percentage of the total number of squares on the grid.

The pencil test is meant to be a qualitative method of determining scratch resistance of a coating. A coated panel is placed on a firm horizontal surface. A pencil is held firmly against the film at a 45° angle (point away from the operator) and pushed away from the operator in a 1/4-in. (6.5-mm) stroke. The process is started with the hardest lead pencil and continued down the scale of hardness to the pencil that will not cut into or gouge the film. The hardest pencil that will not cut through the film to the substrate for a distance of at least 1/8 in. (3mm) is reported according to the following scale from Berol Corporation, Brentwood, TN.:

**-----------softer-----          -------------harder--------------**

**6B, 5B, 4B, 3B, 2B, B, HB, F, H, 2H, 3H, 4H, 5H, 6H,7H,8H,9H**

The HB grade is approximately equal to that of a #2 pencil. The F grade is slightly harder and is the one most commonly used. The H grades are harder than that and get progressively harder up through the 9H grade which is very hard. The B grade is softer than the HB grade and get progressively softer through the 6B grade which is very soft.

In the Steel Wool Test, a two inch square of 0000 steel wool was applied over the face of a 24 oz. hammer and was secured with a rubber band. Coated sample blanks were tested for scratch resistance to 20 double rubs across the center of the sample with the weighted steel wool. The hammer is held by the end of its handle such that the majority of the pressure on the steel wool comes from the hammer head. The sample is graded according to the amount of scratching produced by the steel wool and hammer. The absence of scratches on the sample is graded a 1; slight scratching is graded a 2 and heavy scratching is graded a 3.

In the Water Immersion Test, this property was determined by placing a given sample in boiling water for one hour. During the boiling period, the sample was entirely covered with water and no contact with the heated bottom of the container was allowed. After the boiling period the sample was removed from the water and allowed to cool to room temperature before being tested. The action of placing the sample in boiling water for one hour before withdrawing was repeated three times. Adhesion and Steel Wool tests were performed on the sample after each hour.

In order that those skilled in the art may better understand how to practice the present invention, the following examples are given by way of illustration and not by way of limitation. All parts and percentages in the examples are on a weight basis.

Example 1

A mixture of 3.26 g of methyltrimethoxysilane, 2.78 g of 2-hydroxyethylacrylate, 102.92 g of isopropanol, and 6.42 g of trimethoylpropanetriacrylate was prepared. This mixture was allowed to stand for 18 hours. Next, 22.48 g of Nalco 1034A was added while the mixture underwent agitation. This mixture was filtered through a five micron filter before being flow coated onto a 4 x 4 polycarbonate panel and allowed to air dry for five minutes. The sample was then cured by electron beam under 4MR, 160KeV electron dose at a belt speed of 68 feet per minute under a six inch wide electron beam operated with a 4 milliamp electron current in a nitrogen atmosphere containing 200 ppm oxygen. The test results are summarized in Table I.

Example 2

A mixture of 3.26 g of methyltrimethoxysilane, 2.78 g of 2-hydroxyethylacrylate, 102.92 g of isopropanol, and 6.42 g of trimethoylpropanetriacrylate was prepared. This mixture was allowed to stand for 18 hours. Next, 22.48 g of Nalco 1034A was added while the mixture underwent agitation. To 10.0 g of the mixture was added 0.07 g of 2-hydroxy-2-methyl-1-phenyl-propan-1-one (Darocur (R) 1173), sold by EM Industries, Inc., Hawthorne, NY., and 0.02 g of 2-ethylhexyl-para-dimethylaminobenzoate, available as Uvatone (R) 8303, from The UpJohn Company, North Haven, CT. This mixture was filtered through a five micron filter before being flow coated onto a 4 x 4 polycarbonate panel and allowed to air dry for 5 minutes. The coated polycarbonate sample was then UV cured by passing the sample through a medium pressure

mercury vapor arc lamp with an average intensity of 91.56 mW/cm$^2$ at a line speed of three feet per minute. The test results are summarized in Table I.

Example 3

A mixture of 3.26 g of methyltrimethoxysilane, 2.78 g of 2-hydroxyethylacrylate, 102.92 g of isopropanol, and 6.42 g of trimethoylpropanetriacrylate was prepared. This mixture was allowed to stand for 18 hours. Next, 22.48 g of Nalco 1034A was added while the mixture underwent agitation. To 10.0 g of the mixture 0.06 g of Uvinul (R) D-50, sold by BASF Wyandotte Inc., Parsippany, NJ. and 0.04 g of Tinuvin 144 (R), from Ciba-Geigy Corporation, Hawthorne, NY., was added. This mixture was filtered through a five micron filter before being flow coated onto a 4 x 4 polycarbonate panel and allowed to air dry for five minutes. The sample was then cured by electron beam under 4MR, 160KeV electron dose at a belt speed of 68 feet per minute under a six inch wide electron beam operated with a 4 milliamp electron current in a nitrogen atmosphere containing 200 ppm oxygen. The test results are summarized in Table I.

Example 4

A mixture of 3.26 g of methyltrimethoxysilane, 2.78 g of 2-hydroxyethylacrylate, 102.92 g of isopropanol, and 6.42 g of trimethoylpropanetriacrylate was prepared. This mixture was allowed to stand for 18 hours. Next, 22.48 g of Nalco 1034A was added while the mixture underwent agitation. The volatiles were removed under reduced pressure on a rotoevaporator at 40°C and 2mm Hg. To 34.25 g of the residue, 6.85 g of methylmethacrylate was added. The sample was then coated with a #8 wire wound rod onto a 4 x 4 polycarbonate panel and electron beam cured under 4MR, 160KeV electron dose at a belt speed of 68 feet per minute under a six inch wide electron beam operated with a 4 milliamp electron current in a nitrogen atmosphere containing 200 ppm oxygen. The test results are summarized in Table I.

Example 5

A mixture of 1.63 g of methyltrimethoxysilane, 1.39 g of 2-hydroxyethylacrylate, 25.23 g of isopropanol, and 3.21 g of trimethoylpropanetriacrylate was prepared. This mixture was allowed to stand for 18 hours. Next, 12.73 g of Nalco 1129 was added while the mixture underwent agitation. The resulting mixture was filtered through a five micron filter, before being flow coated onto a 4 x 4 polycarbonate panel and electron beam cured under 4MR, 160KeV electron dose at a belt speed of 68 feet per minute under a six inch wide electron beam operated with a 4 milliamp electron current in a nitrogen atmosphere containing 200 ppm oxygen. The test results are summarized in Table I.

Example 6

A mixture of 1.63 g of methyltrimethoxysilane, 0.86 g of acrylic acid, 51.46 g of isopropanol, and 3.74 g of trimethoylpropanetriacrylate was prepared. This mixture was allowed to stand for 18 hours. Next, 22.48 g of Nalco 1042 was added while the mixture underwent agitation. The resulting mixture was filtered through a five micron filter, before being flow coated onto a 4 x 4 polycarbonate panel and electron beam cured under 4MR, 160KeV electron dose at a belt speed of 68 feet per minute under a six inch wide electron beam operated with a 4 milliamp electron current in a nitrogen atmosphere containing 200 ppm oxygen. The test results are summarized in Table I.

## TABLE I

| Coating Compositions | ADHESION TEST | STEEL WOOL | PENCIL TEST | ABRASION $\%H_{100}$ | ABRASION $\%H_{500}$ | WATER IM. TEST |
|---|---|---|---|---|---|---|
| | Properties of Coated Polycarbonate | | | | | |
| Example 1 | 100% | 3 | B | 2.1 | 9.1 | 100% |
| Example 2 | 100% | 3 | B | 2.1 | 6.3 | 100% |
| Example 3 | 100% | 3 | B | 2.7 | 48.4 | 100% |
| Example 4 | 100% | 2 | B | 7.6 | 29.8 | 100% |
| Example 5 | 100% | 2 | B | 6.8 | 12.1 | 100% |
| Example 6 | 100% | 2 | B | 4.5 | 9.7 | 100% |

As the results in Table I clearly indicate, coating compositions containing, among other things, alkoxy-functional silanes and hydroxyacrylates readily adhere to and form superior transparent abrasion resistant coatings on polycarbonate following radiation cure without the additional step of adding a primer. Furthermore, excellent results were obtained whether the coating compositions were cured by ultraviolet light or electron beam radiation.

Many variations will suggest themselves to those skilled in this art in light of the above detailed description. All such obvious modifications are within the full intended scope of the appended claims.

## Claims

**1.** A radiation curable coating composition comprising:

(A) at least one multifunctional acrylate monomer;

(B) a hydrolysis product of an alkoxy-functional silane of the formula

$R^1_aSi(OR^2)_{4-a}$

wherein:

$R^1$ and $R^2$ are selected from the group consisting of hydrogen and a monovalent hydrocarbon radical having 1 to 6 carbon atoms, including halogenated species of such radicals; a is an integer from 0 to 2;

(C) a hydroxyacrylate selected from the group consisting of

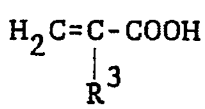

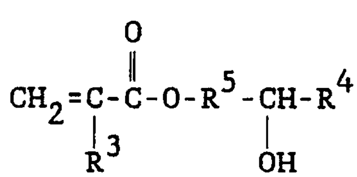

and mixtures thereof, wherein:

$R^3$ is hydrogen or a monovalent hydrocarbon radical having 1 to 6 carbon atoms;

$R^4$ is selected from the group consisting of hydrogen, a monovalent hydrocarbon radical having from

1 to 6 carbon atoms, and a monovalent hydrocarbon radical having from 1 to 6 carbon atoms and containing at least one hydroxy group,
$R^5$ is a divalent hydrocarbon radical having 1 to 10 carbon atoms, optionally containing one or more ether oxygen atoms within aliphatic segments thereof; and
(D) an aqueous sidpersion of colloidal silica.

**2.** A composition as claimed in claim 1 wherein there is also present in the aqueous dispersion of colloidal silica an organic solvent.

**3.** The product obtained by the cure of the composition of claim 1.

**4.** A process for preparing a radiation curable coating composition comprising:
(I) forming a mixture of
(A) at least one multifunctional acrylate monomer;
(B) a silicon compound selected from the group consisting of an alkoxy-functional silane of the formula $R^1{}_aSi(OR^2)_{4-a}$, hydrolysis products of such a silane, and mixtures thereof wherein:
R1 and R2 are independently selected from the group consisting of hydrogen and monovalent hydrocarbon radicals having 1 to 6 carbon atoms, including halogenated species of such radicals,
a is an integer from 0 to 2; and
(C) a hydroxyacrylate selected from the group consisting of

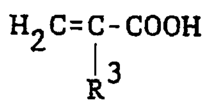

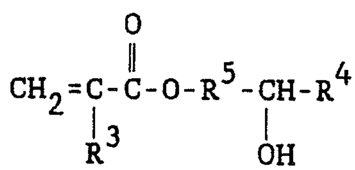

and mixtures thereof, wherein:
R3 is hydrogen or a monovalent hydrocarbon radical having 1 to 6 carbon atoms;
$R^4$ is selected from the group consisting of hydrogen, a monovalent hydrocarbon radical having from 1 to 6 carbon atoms, and a monovalent hydrocarbon radical having from 1 to 6 carbon atoms and containing at least one hydroxy group;
$R^5$ is a divalent hydrocarbon radical having 1 to 10 carbon atoms, optionally containing one or more ether oxygen atoms within aliphatic segments thereof; and thereafter
(II) mixing said component (I) with
(D) an aqueous dispersion of colloidal silica.

**5.** A solid substrate having at least one surface coated with the cured composition of claim 1.

European Patent Office

# EUROPEAN SEARCH REPORT

Application Number

EP 91300400.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US - A - 4 309 319 (HOWARD A. VAUGHN, JR.) * Abstract * -- | 1 | C 09 D 4/00 |
| D,A | US - A - 3 986 997 (HAROLD A. CLARK) * Abstract; columns 1,2 * -- | 1 | |
| D,A | US - A - 4 486 504 (RACK H. CHUNG) * Abstract * ---- | 1 | |

TECHNICAL FIELDS SEARCHED (Int. Cl.5)

C 09 D

The present search report has been drawn up for all claims

| Place of search | Date of completion of the search | Examiner |
|---|---|---|
| VIENNA | 08-03-1991 | HEIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document